# EUROPEAN PATENT APPLICATION

(11) **EP 4 322 052 A1**
(43) Date of publication of application: **14.02.2024**
(21) Application number: 21834253.3
(22) Date of filing: 08.07.2021
(51) Int. Cl.: G06K 9/00, H04N 7/18

(54) **PERSON CATEGORY ATTRIBUTE-BASED REMOTE CARE METHOD AND DEVICE, AND READABLE STORAGE MEDIUM**

(71) Applicant: Shenzhen TCL New Technology Co., Ltd, Shenzhen, Guangdong 518052 (CN)
(72) Inventor: WANG, Yunhua, Shenzhen, Guangdong 518052 (CN); PAN, Yang, Shenzhen, Guangdong 518052 (CN)
(74) Representative: Petraz, Gilberto Luigi
(86) International application number: PCT/CN2021/105321
(87) International publication number: WO 2022/002276

(57) **Abstract**

A person category attribute-based remote care method and device and a readable storage medium. The method comprises: acquiring, on the basis of a smart camera, multiple environment images that comprise a person to be cared for, and determining, according to the multiple environment images, whether the person to be cared for is in a dynamic state (S10); when the person to be cared for is in a dynamic state, then detecting the dynamic speed of the person to be cared for (S20); and according to the dynamic speed, determining a category attribute of the person to be cared for, and collecting a personal image of the person to be cared for in a collection period corresponding to the category attribute for remote care (S30). By using the foregoing method, the validity of remote care is improved from aspects such as the validity of collecting images and the accuracy of a classification collection period.

## Description

### FIELD OF THE DISCLOSURE

The present disclosure relates to a smart home technology, and more particularly, to a remote care method, device and readable storage medium based on person category attributes.

### BACKGROUND

With the development of science and technology, the smart home technology has been promoted to thousands of homes. The smart camera is one of the smart home technologies, which can be used to photograph its installation environment to remotely monitor the installation environment, especially to the remotely monitor caretakers such as children and elderly. Once it is monitored that there are caretakers such as children and elderly in the installation environment, images of such persons are collected and sent to the remote user terminal, so that the remote user can remotely care the caretaker. Technical problem

However, the method of collecting images after monitoring the caretakers, the collected images often have a large number of repeated unnecessary images, such as images of the same person in the same posture. This leads to the ineffective consumption of resources between the transmission parties and thus is not efficient to the remote care. On the other hand, the dynamic factors of different types of personnel are different. Therefore, the images collected by the same collection method cannot accurately reflect the statuses of various types of personnel. This also affects the effectiveness of remote care.

The above content is only used to assist the understanding of the technical solutions of the present disclosure and does not mean that the above content is the prior art.

### SUMMARY

### Technical solution

One objective of an embodiment of the present disclosure is to provide a remote care method, device and readable storage medium based on person category attributes, which can solve the issue of ineffectiveness of remote care due to the conventional method of monitoring the caretakers by collecting images of the caretakers.

According to an embodiment of the present disclosure, a remote care method based on person category attributes is disclosed. The remote care method comprises:
obtaining a plurality of environmental images including a caretaker based on a smart camera, and determining whether the caretaker is in a dynamic state according to the plurality of environmental images;
detecting a dynamic speed of the caretaker when the caretaker is in the dynamic state;
determining a category attribute of the caretaker according to the dynamic speed, and collecting a personnel image of the caretaker according to a collection period corresponding to the category attribute to perform a remote care.

Preferably, the step of determining whether the caretaker is in the dynamic state according to the plurality of environmental images comprises:
determining a luminance difference value between every two environmental images in the plurality of the environmental images, and determining whether any one of the luminance difference values is greater than a predetermined threshold; and
determining that the caretaker is in the dynamic state when any one of the luminance difference values is greater than the predetermined threshold.

Preferably, the step of detecting the dynamic speed of the caretaker when the caretaker is in the dynamic state comprises:
when the caretaker is in the dynamic state, collecting a face image of the caretaker, identifying the face image, and determining a person identification of the caretaker;
finding a wearable device bound to the person identification, and detecting the dynamic speed of the caretaker based on the wearable device.

Preferably, the step of determining the category attribute of the caretaker according to the dynamic speed comprises:
determining the category attribute of the caretaker as a child attribute when the dynamic speed is greater than or equal to a first predetermined threshold;
determining the category attribute of the caretaker as an elderly attribute when the dynamic speed is less than or equal to a second predetermined threshold; and
determining the category attribute of the caretaker as an attribute of young and middle-aged people when the dynamic speed is greater than the second predetermined threshold and less than the first predetermined threshold.

Preferably, the step of obtaining, by the smart camera, the plurality of environmental images including the caretaker comprises:
collecting a plurality of images of an environment where the smart camera is located based on the smart camera running at a predetermined rotational speed;
determining whether there is an image including the caretaker among the plurality of images, and extracting all images including the caretaker from the plurality of images when there is an image including the caretaker; and
sorting all the images including the caretaker to obtain the plurality of the environmental images according to obtaining time points of all the images including the caretaker.

Preferably, after the step of determining the category attribute of the caretaker according to the dynamic speed, the remote care method further comprises:
adjusting a predetermined collection period of the smart camera according to the category attribute to obtain a collection period corresponding to the category attribute.

Preferably, the step of adjusting the predetermined collection period of the smart camera according to the category attribute comprises:
when the category attribute is a child attribute, obtaining a first coefficient corresponding to the child attribute, and adjusting the predetermined collection period of the smart camera based on the first coefficient;
when the category attribute is an elderly attribute, obtaining a second coefficient corresponding to the elderly attribute, and adjusting the predetermined collection period of the smart camera based on the second coefficient; and
when the category attribute is a young and middle-aged attribute, obtaining a second coefficient corresponding to the young and middle-aged attribute, and adjusting the predetermined collection period of the smart camera based on the second coefficient.

Preferably, the step of collecting the personnel image of the caretaker according to the collection period corresponding to the category attribute to perform the remote care comprises:
controlling the smart camera to collect the personnel image of the caretaker according to the collection period corresponding to the category attribute; and
transferring the personnel image to a remote care terminal associated with the caretaker, so as to perform remote care on the caretaker.

According to an embodiment of the present disclosure, a remote care device based on person category attributes is disclosed. The remote care device comprises: a memory, storing a remote care program based on person category attributes; and a processor, configured to execute the remote care program to perform the above-mentioned remote care method.

According to an embodiment of the present disclosure, a computer readable storage medium storing instructions executable by a processor to perform the remote care method as disclosed above is provided.

According to an embodiment of the present disclosure, a remote care method based on the person category attributes, a remote care device and a computer readable storage medium are disclosed. The method firstly obtains a plurality of environmental images including the caretaker through a smart camera, and judge whether the caretaker is in a dynamic state according to the plurality of environmental images image; detect the dynamic speed of the caretaker when the caretaker is in a dynamic state; then determine the category attribute of the caretaker according to the dynamic speed and collect the personnel image of the caretaker according to the collection period corresponding to the category attribute; and realize the remote care of the caretaker through the collected personnel image. Because only when the caretaker is in a dynamic state, the image of the caretaker is collected for remote care. This avoids the collection of a large number of repeated unnecessary images and ensures the effectiveness of the remote care. Moreover, the personnel images are collected according to the collection period of the personnel category to which caretaker belongs, and the collected personnel images can accurately reflect the state of the caretaker. This further improves the effectiveness of the remote care. Therefore, the present disclosure could realize the improvement of the effectiveness of remote care from the aspects of the effectiveness of the collected images and the accuracy of the classification collection cycle.

### Advantageous effect

According to an embodiment of the present disclosure, a method, device, device, and computer/machine readable storage medium for monitoring a door open/close state is disclosed. In the embodiment of the invention, the door to be monitored is photographed by a predetermined camera device, so as to obtain the camera information including a video, and further, by analyzing the video frames, whether a person is in contact with the door to be monitored is determined, so as to indicate a scenario of the person walking out of the door to be monitored. When the open/close status monitoring program determines that a person is in contact with the door to be monitored, it will further intercept the two images before and after the contact. The images are the first image and the second image respectively, and finally the opening and closing state of the door to be monitored is determined through the first image and the second image. This embodiment realizes a real-time monitoring of the opening and closing state of the door to be monitored without increasing the cost (without using a special door lock).

### BRIEF DESCRIPTION OF THE DRAWINGS

Fig. 1 is a diagram of a terminal structure of a hardware operating environment according to an embodiment of the present disclosure.
Fig. 2 is a flowchart of a remote care method based on a person category attribute according to a first embodiment of the present disclosure.

The realization, functional characteristics and advantages of the purpose of the present application will be further described with reference to the accompanying drawings in conjunction with the embodiments.

### DETAILED DESCRIPTION

It should be understood that the specific embodiments described herein are only used to explain the present disclosure, but not to limit the present disclosure.

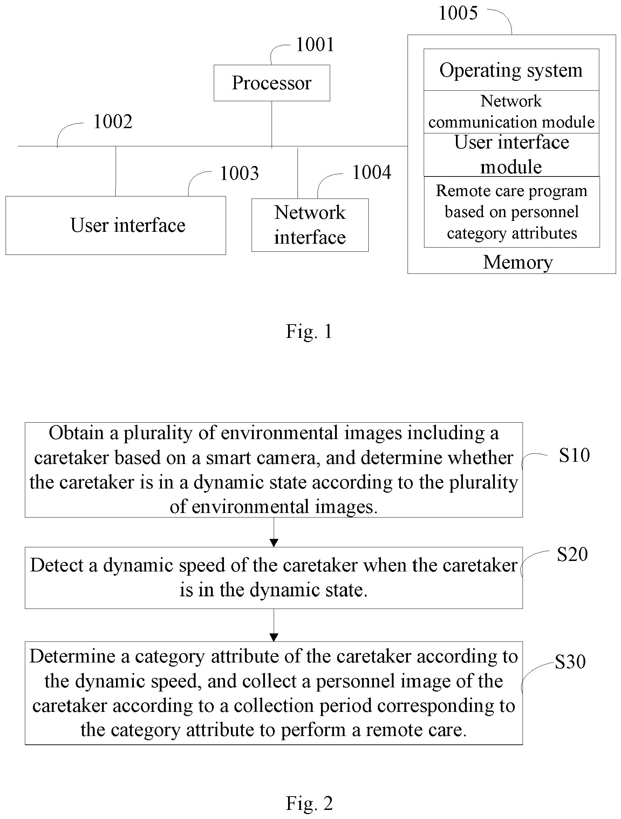

The present disclosure provides a remote care device based on person category attributes. Please refer to Fig. 1. Fig. 1 is a diagram of a terminal structure of a hardware operating environment according to an embodiment of the present disclosure.

As shown in Fig. 1, the remote care device based on person category attributes includes: a processor 1001, such as a CPU, a network interface 1004, a user interface 1003, a memory 1005, and a bus 1002. The communication bus 1002 is used to implement the connection communication between these components. The user interface 1003 may include a display screen, an input unit such as a keyboard. Optionally, the user interface 1003 may further include a standard wired interface and/or a wireless interface. The network interface 1004 optionally may include a standard wired interface, a wireless interface (such as a Wi-Fi interface). The memory 1005 may be a high-speed RAM memory or a non-volatile memory, such as a disk or a flash memory. The memory 1005 may also be a separate storage device independent from the processor 1001.

Those skilled in the art can understand that the hardware structure of the remote care device based on the category attribute of the person shown in Fig. 1 does not constitute a limitation on the remote care device, and may include more or less components, or a combination of certain components, or a different arrangement of components.

The memory 1005, as a computer storage medium, may store an operating system, a network communication module, a user interface module, and a remote care program based on person category attributes.

The network interface 1004 is mainly used to connect to the background server and perform data communication with the background server. The user interface 1003 is mainly used to connect to the client end and perform data communication with the client end. The processor 1001 can be used to execute the remote care program based on the person category attributes stored in the memory 1005 and perform operations comprising:
obtaining a plurality of environmental images including a caretaker based on a smart camera, and determining whether the caretaker is in a dynamic state according to the plurality of environmental images;
detecting a dynamic speed of the caretaker when the caretaker is in the dynamic state;
determining a category attribute of the caretaker according to the dynamic speed, and collecting a personnel image of the caretaker according to a collection period corresponding to the category attribute to perform a remote care.

Furthermore, the operation of determining whether the caretaker is in the dynamic state according to the plurality of environmental images comprises:
determining a luminance difference value between every two environmental images in the plurality of the environmental images, and determining whether any one of the luminance difference values is greater than a predetermined threshold; and
determining that the caretaker is in the dynamic state when any one of the luminance difference values is greater than the predetermined threshold.

Furthermore, the operation of detecting the dynamic speed of the caretaker when the caretaker is in the dynamic state comprises:
when the caretaker is in the dynamic state, collecting a face image of the caretaker, identifying the face image, and determining a person identification of the caretaker;
finding a wearable device bound to the person identification, and detecting the dynamic speed of the caretaker based on the wearable device.

Furthermore, the operation of determining the category attribute of the caretaker according to the dynamic speed comprises:
determining the category attribute of the caretaker as a child attribute when the dynamic speed is greater than or equal to a first predetermined threshold;
determining the category attribute of the caretaker as an elderly attribute when the dynamic speed is less than or equal to a second predetermined threshold; and
determining the category attribute of the caretaker as an attribute of young and middle-aged people when the dynamic speed is greater than the second predetermined threshold and less than the first predetermined threshold.

Furthermore, the operation of obtaining, by the smart camera, the plurality of environmental images including the caretaker comprises:
collecting a plurality of images of an environment where the smart camera is located based on the smart camera running at a predetermined rotational speed;
determining whether there is an image including the caretaker among the plurality of images, and extracting all images including the caretaker from the plurality of images when there is an image including the caretaker; and
sorting all the images including the caretaker to obtain the plurality of the environmental images according to obtaining time points of all the images including the caretaker.

Furthermore, after the operation of determining the category attribute of the caretaker according to the dynamic speed, the processor 1001 can execute the instructions stored in the memory 1005 to perform the following operation:
adjusting a predetermined collection period of the smart camera according to the category attribute to obtain a collection period corresponding to the category attribute.

Furthermore, the operation of adjusting the predetermined collection period of the smart camera according to the category attribute comprises:
when the category attribute is a child attribute, obtaining a first coefficient corresponding to the child attribute, and adjusting the predetermined collection period of the smart camera based on the first coefficient;
when the category attribute is an elderly attribute, obtaining a second coefficient corresponding to the elderly attribute, and adjusting the predetermined collection period of the smart camera based on the second coefficient; and
when the category attribute is a young and middle-aged attribute, obtaining a second coefficient corresponding to the young and middle-aged attribute, and adjusting the predetermined collection period of the smart camera based on the second coefficient.

Furthermore, the operation of collecting the personnel image of the caretaker according to the collection period corresponding to the category attribute to perform the remote care comprises:
controlling the smart camera to collect the personnel image of the caretaker according to the collection period corresponding to the category attribute;
transferring the personnel image to a remote care terminal associated with the caretaker, so as to perform remote care on the caretaker.

The specific implementation of the remote care device of the present disclosure is basically the same as the following embodiments of the remote care method based on the person category attribute, and will not be repeated here.

For better understanding of the above technical solutions, exemplary embodiments of the present disclosure will be described in more detail below with reference to the accompanying drawings. While exemplary embodiments of the present disclosure are shown in the drawings, it should be understood that the present disclosure may be embodied in various forms and should not be limited by the embodiments set forth herein. Rather, these embodiments are provided so that the present disclosure will be more thoroughly understood, and will fully convey the scope of the present disclosure to those skilled in the art.

In order to better understand the above technical solutions, the above technical solutions will be described in detail below with reference to the accompanying drawings and specific embodiments.

Please refer to Fig. 2. Fig. 2 is a flowchart of a remote care method based on a person category attribute according to a first embodiment of the present disclosure. The remote care method comprises:
Step S10: obtaining a plurality of environmental images including a caretaker based on a smart camera, and determining whether the caretaker is in a dynamic state according to the plurality of environmental images.

In this embodiment, the remote care method based on person category attributes is used in a remote care system. The remote care system at least includes a smart camera and a remote server. When the caretaker is in a dynamic state and thus needs care, the personnel images are collected by the smart camera according to the collection period corresponding to the personnel category of the caretaker and transmitted to the remote server. The remote server sends the images of the caretaker to the terminal of a caregiver to realize the remote care of the caregiver. The caretaker may be any person in the environment where the smart camera is located and a person who will appear in the environment is the caretaker. Or, a specific person can be set as the caretaker. No matter how the caretaker is determined, before remote care is performed, it is necessary to determine whether the caretaker is in a dynamic state, that is, to determine whether it is time to collect the image of caretaker. And the determination process can be realized by collecting multiple images of the environment where the smart camera is located, and selecting those images containing the caretaker. That is, the smart camera is controlled to capture images of the environment in which it is installed, and the captured images including the image of the caretaker are set as environmental images. Considering that the environment where the camera is located does not necessarily contain the caretaker, in the process of screening the images of the environment containing the caretaker, it firstly determines whether the plurality of images of the environment where the camera is located contains the caretaker, and selects those containing the caretaker as effective environmental images only after the caretaker has been identified in at least one captured image. Specifically, the steps of obtaining a plurality of environmental images including the caretaker based on the smart camera include:
Step S 11: collecting a plurality of images of the environment where the smart camera is located based on the smart camera running at a predetermined rotational speed.
Step S12: determining whether there is an image including the caretaker among the plurality of images, and extracting all images including the caretaker from the plurality of images when there is an image including the caretaker.
Step S13: sorting all the images including the caretaker to obtain the plurality of the environmental images according to obtaining time points of all the images including the caretaker.

The smart camera is preferably a 360° rotating camera, so as to take a comprehensive image of all angles of the environment in which it is located. The rotational speed of the smart camera is set in advance according to the requirements, and the set rotational speed is the predetermined rotational speed of the smart camera. The smart camera runs at the predetermined rotational speed to shoot the environment in which it is located, and obtains multiple images and transmits the obtained images to the remote server as multiple images of the environment where the smart camera is collected by the remote server. Then, the remote server identifies the plurality of images separately to determine whether any one of them contains the caretaker. In the case where the caretaker could be any person in the environment, it determines whether there is an image containing a person. When there is an image containing a person, then it determines that there is an image containing the caretaker among the plurality of images. For the case where the caretaker is a specific person, it first determines whether there is an image containing a person. After recognizing that there is an image containing a person, it then determines whether the person is a specific person. When the identified person is the specific person, then it determines that there is an image including the caretaker among the plurality of images.

For the scenario that multiple images contain images of the caretaker, it means that the smart camera captures the image of the caretaker in the current rotation period. That is, there are people who need remote care in the environment where the camera is located. In order to determine the state of the caretaker in the environment, after it determines that any one of the images contains the caretaker, the obtained images are screened, and all images containing the caretaker are extracted from them. In addition, the time points of each image captured by the smart camera are taken as the obtaining time points of each image, and all images containing the caretaker are sorted according to the respective obtaining time points of all the images containing the caretaker. The images with the earlier collection time points are arranged in the front row, and the images with the later collection time points are arranged in the back row, so as to form a time sequence image including the caretaker. The time sequence image is a plurality of environmental images including the caretaker and represents the action state of the caretaker within a time period.

Furthermore, after obtaining a plurality of environmental images containing the caretaker, it is possible to determine whether the caretaker is in a dynamic state according to the plurality of environmental images. Here, the dynamic state represents states of walking, jumping, getting up, sitting down, sitting up, etc. When the caretaker is in a dynamic state, their imaging postures in the environmental image are different. For example, in the state of getting up, the imaging posture of the caretaker is sitting at the previous moments in the environmental images and becomes standing in the next moments in the environmental images. Therefore, whether the caretaker is in a dynamic state could be determined by checking whether the imaging postures of the caretaker in the environmental images at different times are the same.

In this embodiment, the dynamic state of the caretaker could be determined by the imaging postures in the environmental images at different times. Moreover, the dynamic state of the caretaker could also be determined by the luminance change of the environmental images at different times. As the caretaker moves in the environment, it affects the light at the angle captured by the smart camera, so that the luminance of the captured environmental images changes. Therefore, the dynamic state of the caretaker could be determined by detecting luminance changes of the environmental images at different times.

Step S20: detecting a dynamic speed of the caretaker when the caretaker is in the dynamic state.

After it is determined that the caretaker is in a dynamic state through the imaging postures or the luminance change in the environmental images, the dynamic speed of the caretaker is then detected. The dynamic speed represents the movement range of the caretaker. The dynamic speed can be detected by monitoring the moving distance within a certain period of time, or can be detected by a wearable device with a speed detection function worn on the caretaker.

Step S30: determining a category attribute of the caretaker according to the dynamic speed, and collecting a personnel image of the caretaker according to a collection period corresponding to the category attribute to perform a remote care.

Different types of people have different movement speed characteristics. For example, for children, their movement speed is relatively fast, for middle-aged and young people, their running speed is relatively stable, and for elderly people, their running speed is relatively slow. After the dynamic speed of the caretaker is determined, the type of the caretaker, which is also the category attribute, can be determined according to the dynamic speed.

In addition, because different types of people have different movement speeds. In order to accurately reflect the movement states of various types of people in the images collected by the smart camera, in this embodiment, different collection periods are set according to different types of people. For children, because of their relatively fast movement speed, a shorter collection period is set to avoid inaccurate determination of the action state caused by the insufficient collection period. For young and middle-aged people, because their movement speed is relatively stable, a medium collection period is set to accurately reflect the action state and ease the processing efficiency. For the elderly, because of their relatively slow movement speed, a longer collection period is set to avoid processing a large number of invalid images and affecting the processing efficiency. After the category attribute of the caretaker is determined, the personnel image of caretaker can be collected according to the collection period set for the category attribute to perform the remote care. That is, the smart camera is controlled to collect the images of the caretaker from the captured images in this collection periods and transmit the images to the remote server, and the remote server sends the images to the remote care terminal associated with the caretaker. The remote care terminal held by the caregiver could perform the remote care on the caretaker through the personnel images received by the remote care terminal.

An embodiment of the present disclosure is directed to a remote care method based on the person category attributes. The method firstly obtains a plurality of environmental images including the caretaker through a smart camera, and judge whether the caretaker is in a dynamic state according to the plurality of environmental images image; detect the dynamic speed of the caretaker when the caretaker is in a dynamic state; then determine the category attribute of the caretaker according to the dynamic speed and collect the personnel image of the caretaker according to the collection period corresponding to the category attribute; and realize the remote care of the caretaker through the collected personnel image. Because only when the caretaker is in a dynamic state, the image of the caretaker is collected for remote care. This avoids the collection of a large number of repeated unnecessary images and ensures the effectiveness of the remote care. Moreover, the personnel images are collected according to the collection period of the personnel category to which caretaker belongs, and the collected personnel images can accurately reflect the state of the caretaker. This further improves the effectiveness of the remote care. Therefore, the present disclosure could realize the improvement of the effectiveness of remote care from the aspects of the effectiveness of the collected images and the accuracy of the classification collection cycle.

Furthermore, another remote care method based on the person category attribute is provided according to a second embodiment of the present disclosure. In the second embodiment, the step of determining whether the caretaker is in a dynamic state according to a plurality of the environment images includes:
Step S14: determining a luminance difference value between every two environmental images in the plurality of the environmental images, and determining whether any one of the luminance difference values is greater than a predetermined threshold.
Step S15: determining that the caretaker is in the dynamic state when any one of the luminance difference values is greater than the predetermined threshold.

In this embodiment, the dynamic state of the caretaker is determined by the luminance change of the environmental images at different times. The luminance value of each environmental image is detected, and a difference calculation is performed between the luminance values of each arbitrary two environmental images to obtain the luminance difference value between each arbitrary two environmental images. At the same time, a predetermined threshold is set to indicate that the luminance difference is large enough to represent that the caretaker is in a dynamic state. Then, the calculated luminance difference is compared with the predetermined threshold to determine whether the luminance difference is greater than the predetermined threshold. When the luminance difference is greater than the predetermined threshold, it means that the luminance values of the two ambient images that generate the luminance difference are quite different. In this case, it represents that there are changing factors, caused by the actions of the caretaker, resulting in the luminance difference. Therefore, the caretaker is determined to be in a dynamic state. In the process of comparing the luminance difference with the predetermined threshold, as long as one of the luminance differences is greater than the predetermined threshold, the caretaker is determined as being in a dynamic state. In this way, the amount of processed data is reduced and the processing efficiency is improved. Furthermore, because multiple environmental images are generated in one rotation period of the smart camera, when the luminance difference between any two environmental images is large, this is enough to reflect the changing factors in the rotation cycle. The determination made based on the luminance difference has a higher accuracy and improves the processing efficiency.

The luminance difference between each two environmental images can be generated according to the order of the environmental images. That is, the luminance difference between every two adjacent environmental images is calculated to more accurately identify the luminance change of the images before and after a specific moment. In this way, the dynamic state of the caretaker is determined by the luminance change at each moment. As long as there is one luminance difference generated by the adjacent environmental images greater than the predetermined threshold, the caretaker is determined to be in a dynamic state. This could ensure determination accuracy and improve the processing efficiency.

After the caretaker is determined to be in a dynamic state, the dynamic speed of the caretaker is detected. Specifically, when the caretaker is in a dynamic state, the step of detecting the dynamic speed of the caretaker includes:
Step S21: when the caretaker is in the dynamic state, collect a face image of the caretaker, identify the face image, and determine a person identification of the caretaker.
Step S22: find a wearable device bound to the person identification, and detecting the dynamic speed of the caretaker based on the wearable device.

In this embodiment, the dynamic speed of the caretaker is detected through a wearable device that communicates with a remote server. The wearable device may be a smart device, a smart watch, etc. that has a function to detect the current speed. And different caretakers and their respective wearable devices are pre-bound in the remote server, so as to distinguish caretakers in the same environment. Specifically, the face images of each caretaker are collected in advance, and a personnel identification representing the uniqueness of each caretaker is set for each face image. Then, the wearable devices possessed by each caretaker are associated with their respective personnel identifications, and are stored in the remote server together with each face image.

After the caretaker is determined to be in a dynamic state, the face image of the caretaker is collected, and the collection can be performed by intercepting the image of the environment or by taking a picture of the face of the caretaker by a smart camera. Then, the obtained face image could be identified to determine a target face image, whose similarity reaches the predetermined value among the face images in the remote server. And then, the person identification stored together with the target face image is identified as the caretaker's personnel identification. After that, the wearable device associated with the personnel identification in the remote server is searched and identified as the wearable device corresponding to the personnel identification of the caretaker. In this way, the wearable device could be identified as the wearable device used by the caretaker. Accordingly, the dynamic speed detected by the wearable device could be regarded as the movement magnitude/dynamic speed of the caretaker.

After detecting the dynamic speed of the caretaker, the category attribute of the caretaker can be determined according to the magnitude of the dynamic speed. Specifically, the step of determining the category attribute of caretaker according to the dynamic speed includes:
Step S31: determining the category attribute of the caretaker as a child attribute when the dynamic speed is greater than or equal to a first predetermined threshold.
Step S32: determining the category attribute of the caretaker as an elderly attribute when the dynamic speed is less than or equal to a second predetermined threshold.
Step S33: determining the category attribute of the caretaker as an attribute of young and middle-aged people when the dynamic speed is greater than the second predetermined threshold and less than the first predetermined threshold.

In this embodiment, various predetermined thresholds representing the dynamic speed characteristics of various types of persons, including children, elderly and middle-aged and young people, are predetermined, and each predetermined threshold is determined according to a plurality of dynamic speed values of various types of persons. That is, the first predetermined threshold value representing the dynamic speed characteristics of children is set according to the dynamic speed values of a plurality of children, and the second predetermined threshold value representing the dynamic speed characteristics of the elderly is set according to the dynamic speed values of a plurality of elderly people. The value between the first predetermined threshold value and a second predetermined threshold value is set to represent the dynamic speed characteristics of young and middle-aged people. After the dynamic speed of the caretaker is obtained, the dynamic speed of the caretaker is compared with the first predetermined threshold to determine whether it is greater than or equal to the first predetermined threshold. When it is greater than or equal to the first predetermined threshold, it means that the value of the dynamic speed is large, and usually the dynamic speed of a child is large. In other words, the dynamic speed indicates that the caretaker has the characteristic of the dynamic speed of a child, so the category attribute is determined as a child attribute to indicate that the caretaker is a child.

When the dynamic speed of the caretaker is determined to be less than the first predetermined threshold, the dynamic speed is then compared with the second predetermined threshold to determine whether the dynamic speed is less than or equal to the second predetermined threshold. When it is less than or equal to the second predetermined threshold, it means that the value of the dynamic speed is small, and usually the dynamic speed of an elderly person is small. In other words, the dynamic speed indicates that the caretaker has the characteristic of the dynamic speed of an elderly person, so the category attribute is determined as an elderly attribute to indicate that the caretaker is an elderly person.

When the dynamic speed of the caretaker is greater than the second predetermined threshold, it means that the value of the dynamic speed is in the interval between the first predetermined threshold and the second predetermined threshold, and the value of the dynamic speed is medium, which is usually the speed of the young and middle-aged people. In other words, the dynamic speed indicates that the caretaker has the characteristic of the dynamic speed of a young and middle-aged person, so the category attribute is determined as an attribute of a young and middle-aged person to indicate that the caretaker is a young and middle-aged person.

In this embodiment, the luminance difference between each two environmental images is used to determine whether the caretaker is in a dynamic state. This improves the determination efficiency and the determination accuracy. Furthermore, the wearable device corresponding to the caretaker is used to accurately detect the dynamic speed of the caretaker. Then, the category attribute of the caretaker is determined by the dynamic speed, and the personnel images of the caretaker are collected according to the collection cycle corresponding to the category attribute. This could realize a remote care well directed to the caretaker and ensure the effectiveness of the remote care.

Furthermore, based on the above-mentioned first embodiment or the second embodiment, the present disclosure further provides a remote care method based on the person category attributes of a third embodiment. In the third embodiment, the step of determining the category attribute of the caretaker according to the dynamic speed includes:
Step a: adjusting a predetermined collection period of the smart camera according to the category attribute to obtain a collection period corresponding to the category attribute.

In this embodiment, after the category attribute of the caretaker is determined, the predetermined collection period of the smart camera can be adjusted according to the category attribute. Here, the predetermined collection period is a predetermined time period for the smart camera to collect a person's image. For example, it can be 1ms, which means that a person's image is collected every 1ms. According to different category attributes, different adjustments are made to the predetermined collection period to obtain the collection period corresponding to the category attribute, so that the personnel images collected in the collection period can accurately reflect the dynamic state of the caretaker. Specifically, according to the category attribute, the steps of adjusting the predetermined collection period of the smart camera includes:
Step a1: when the category attribute is a child attribute, obtaining a first coefficient corresponding to the child attribute, and adjusting the predetermined collection period of the smart camera based on the first coefficient.
Step a2: when the category attribute is an elderly attribute, obtaining a second coefficient corresponding to the elderly attribute, and adjusting the predetermined collection period of the smart camera based on the second coefficient.
Step a3: when the category attribute is a young and middle-aged attribute, obtaining a second coefficient corresponding to the young and middle-aged attribute, and adjusting the predetermined collection period of the smart camera based on the second coefficient.

Furthermore, different adjustment coefficients are set in the remote server for different category attributes. The predetermined collection period is adjusted to a collection period corresponding to the category attribute through the respective adjustment coefficients. When the category attribute is determined to be the child attribute, the adjustment coefficient corresponding to the child attribute is obtained as the first coefficient, and the predetermined collection period of the smart camera is adjusted based on the first coefficient to obtain a new collection period corresponding to the child attribute. Because children have the characteristics of rapid change of actions, more images of a child need to be collected in a short period of time to reflect his movement state. Therefore, the first coefficient can be set to a coefficient less than 1 to adjust the predetermined collection period to be shorter. In this way, more images of the caretaker could be obtained in a short time to accurately reflect the movement state.

When the category attribute is determined to be the elderly attribute, the adjustment coefficient corresponding to the elderly attribute is obtained as the second coefficient, and the predetermined collection period of the smart camera is adjusted based on the second coefficient, so as to obtain a new collection period corresponding to the elderly attribute. Because the elderly have the characteristics of slow movement, a fewer images of an elderly person need to be collected in a short period of time to reflect his movement status. Therefore, the second coefficient can be set to a coefficient greater than 1, so as to adjust the predetermined collection period to a longer time, so as to collect fewer personnel images in a short time, and to accurately reflect the movement state of an elderly person.

When the category attribute is determined to be the young and middle-aged attribute, the adjustment coefficient corresponding to the young and middle-aged attribute is obtained as the third coefficient, and the predetermined collection period of the smart camera is adjusted based on the second coefficient, so as to obtain a new collection period corresponding to the young and middle-aged attribute. Because young and middle-aged people have the characteristics of stable movements, a medium number of images of the caretaker need to be collected in a short period of time to reflect his movement status. Therefore, the third coefficient can be set to a coefficient equal to 1, so as to adjust the predetermined collection period to the time period with little change, so as to collect a medium number of personnel images in a short time, and to accurately reflect the movement state of young and middle-aged people.

In an embodiment, for the caretaker P, when the category attribute of the caretaker P is determined to be a young and middle-aged attribute according to his dynamic speed, then the third adjustment coefficient 1 corresponding to the young and middle-aged attribute is obtained and used to adjust the predetermined collection period of the smart camera. For example, the predetermined collection period of the smart camera is w. The obtained third adjustment coefficient 1 is used to adjust the predetermined collection period w, and the adjustment is performed by multiplying the third adjustment coefficient 1 by the predetermined collection period w. The calculation result obtained by the multiplying operation is the adjusted collection period. The smart camera is controlled to collect the personnel images of the caretaker P at the adjusted collection period, and the collected personnel images can accurately reflect the movement state of the caretaker P.

In addition, after adjusting the predetermined collection period of the smart camera to obtain the collection period corresponding to the category attribute, the smart camera collects the images of the caretaker at the adjusted collection period and the collected personnel images are used to perform the remote care. Specifically, the step of collecting the personnel image of the caretaker at the collection period corresponding to the category attribute to perform the remote care includes:
Step b 1: controlling the smart camera to collect the personnel image of the caretaker according to the collection period corresponding to the category attribute.
Step b2: transferring the personnel image to a remote care terminal associated with the caretaker, so as to perform the remote care on the caretaker.

Further, after adjusting the predetermined collection period of the smart camera to the collection period corresponding to the category attribute, the remote server sends the adjusted collection period to the smart camera, so as to control the smart camera to collect the images of the caretaker at the collection period. The smart camera transfers the collected image of the caretaker to the remote server. The remote server sends the collected images to the remote care terminal associated with the caretaker, which is the terminal held by the caregiver. The caregiver views the personnel images through the remote care terminal to perform the remote care on the caretaker.

In this embodiment, the above-mentioned operation of collecting personnel images according to the collection period corresponding to the category attribute to detect the movement state of various persons could be achieved by adjusting the running speed of the smart camera. When the category attribute is the child attribute, the running speed of the smart camera is adjusted to a larger value, so as to obtain more pictures of the caretaker by running quickly, and accurately reflect the movement state to achieve effective care. When the category attribute is the elderly attribute, the running speed of the smart camera is adjusted to a smaller value, so as to obtain fewer pictures of the caretaker by running slowly, so as to reduce the amount of image data processing and transmission while accurately reflecting the movement state and achieving effective care. When the attribute type is the attribute of young and middle-aged people, the running speed of the smart camera is adjusted to a certain stable value, so as to stably obtain an appropriate amount of personnel pictures, to achieve a balance between accurately reflecting the movement state and image data processing and transmission, which could also achieve effective care.

In this embodiment, the predetermined collection period of the smart camera is adjusted to the collection period corresponding to the category attribute, and the personnel images of the caretaker are collected through the collection period corresponding to the category attribute. The collected personnel images fully reflect the movement state of the caretaker, thereby ensuring the effectiveness of the remote care.

In addition, the present disclosure also provides a computer readable storage medium on which a remote care program based on person category attributes is stored. When the remote care program is executed by a processor, the steps of any of the remote care method based on person category in any of the above-mentioned embodiments are performed.

The embodiments of the computer readable storage medium of the present disclosure include all the technical features of the above-mentioned embodiments of the remote care method based on the category attribute of persons, and the description and explanation contents are basically the same as those of the above-mentioned embodiments of the remote care method, and will not be repeated here.

It should be noted that, herein, the terms "comprising", "including" or any other variation thereof are intended to encompass non-exclusive inclusion, such that a process, method, article or system comprising a series of elements includes not only those elements. It also includes other elements not expressly listed or inherent to such a process, method, article or system. Without further limitation, an element qualified by the phrase "comprising a..." does not preclude the presence of additional identical elements in the process, method, article or system that includes the element.

The above-mentioned serial numbers of the embodiments of the present disclosure are only for description, and do not represent the advantages or disadvantages of the embodiments.

From the description of the above embodiments, those skilled in the art can clearly understand that the method of the above embodiment can be implemented by means of software plus a necessary general hardware platform, and of course can also be implemented by hardware, but in many cases the former is better implementation. Based on this understanding, the technical solutions of the present disclosure can be embodied in the form of software products in essence or the parts that make contributions to the prior art. The computer software products are stored in a storage medium (such as ROM/RAM, magnetic disk, optical disk), including several instructions to make a terminal device (which may be a mobile phone, a computer, a server, an air conditioner, or a network device, etc.) execute the methods described in the various embodiments of the present disclosure.

The above are only the preferred embodiments of the present disclosure, and are not intended to limit the scope of the present disclosure. Any equivalent structure or equivalent process transformation made by using the contents of the description and drawings of the present disclosure, or directly or indirectly applied in other related technical fields, are similarly included within the scope of this present disclosure.

## Claims

1. A remote care method based on person category attributes, comprising:
obtaining a plurality of environmental images including a caretaker based on a smart camera, and determining whether the caretaker is in a dynamic state according to the plurality of environmental images;
detecting a dynamic speed of the caretaker when the caretaker is in the dynamic state; and
determining a category attribute of the caretaker according to the dynamic speed, and collecting a personnel image of the caretaker according to a collection period corresponding to the category attribute to perform a remote care.

2. The remote care method of claim 1, **characterized in that** the step of determining whether the caretaker is in the dynamic state according to the plurality of environmental images comprises:
determining a luminance difference value between every two environmental images in the plurality of the environmental images, and determining whether any one of the luminance difference values is greater than a predetermined threshold; and
determining that the caretaker is in the dynamic state when any one of the luminance difference values is greater than the predetermined threshold.

3. The remote care method of claim 1, **characterized in that** the step of detecting the dynamic speed of the caretaker when the caretaker is in the dynamic state comprises:
when the caretaker is in the dynamic state, collecting a face image of the caretaker, identifying the face image, and determining a person identification of the caretaker;
finding a wearable device bound to the person identification, and detecting the dynamic speed of the caretaker based on the wearable device.

4. The remote care method of claim 1, **characterized in that** the step of determining the category attribute of the caretaker according to the dynamic speed comprises:
determining the category attribute of the caretaker as a child attribute when the dynamic speed is greater than or equal to a first predetermined threshold;
determining the category attribute of the caretaker as an elderly attribute when the dynamic speed is less than or equal to a second predetermined threshold; and
determining the category attribute of the caretaker as an attribute of young and middle-aged people when the dynamic speed is greater than the second predetermined threshold and less than the first predetermined threshold.

5. The remote care method of claim 1, **characterized in that** the step of obtaining, by the smart camera, the plurality of environmental images including the caretaker comprises:
collecting a plurality of images of an environment where the smart camera is located based on the smart camera running at a predetermined rotational speed;
determining whether there is an image including the caretaker among the plurality of images, and extracting all images including the caretaker from the plurality of images when there is an image including the caretaker; and
sorting all the images including the caretaker to obtain the plurality of the environmental images according to obtaining time points of all the images including the caretaker.

6. The remote care method of claim 1, further comprising a following step after the step of determining the category attribute of the caretaker according to the dynamic speed:
adjusting a predetermined collection period of the smart camera according to the category attribute to obtain a collection period corresponding to the category attribute.

7. The remote care method of claim 6, **characterized in that** the step of adjusting the predetermined collection period of the smart camera according to the category attribute comprises:
when the category attribute is a child attribute, obtaining a first coefficient corresponding to the child attribute, and adjusting the predetermined collection period of the smart camera based on the first coefficient;
when the category attribute is an elderly attribute, obtaining a second coefficient corresponding to the elderly attribute, and adjusting the predetermined collection period of the smart camera based on the second coefficient; and
when the category attribute is a young and middle-aged attribute, obtaining a second coefficient corresponding to the young and middle-aged attribute, and adjusting the predetermined collection period of the smart camera based on the second coefficient.

8. The remote care method of claim 1, **characterized in that** the step of collecting the personnel image of the caretaker according to the collection period corresponding to the category attribute to perform the remote care comprises:
controlling the smart camera to collect the personnel image of the caretaker according to the collection period corresponding to the category attribute; and
transferring the personnel image to a remote care terminal associated with the caretaker, so as to perform remote care on the caretaker.

9. The remote care method of claim 1, **characterized in that** the step of determining whether the caretaker is in the dynamic state according to the plurality of environmental images comprises:
determining whether imaging postures of the caretaker in the environmental images at different times are identical according to the plurality of the environmental images, so as to determine whether the caretaker is in the dynamic state.

10. The remote care method of claim 2, **characterized in that** the step of determining the luminance difference value between every two environmental images in the plurality of the environmental images comprises:
according to an order of the plurality of environmental images, calculating the luminance difference between every two adjacent environmental images in the order of the plurality of environmental images.

11. The remote care method of claim 7, **characterized in that** the first coefficient is smaller than the third coefficient, and the third coefficient is smaller than the second coefficient.

12. The remote care method of claim 11, **characterized in that** the step of adjusting the predetermined collection period of the smart camera based on the first coefficient comprises adjusting the predetermined collection period of the smart camera based on the first coefficient to obtain a new collection period corresponding to the child attribute; the step of adjusting the predetermined collection period of the smart camera based on the second coefficient includes: adjusting the predetermined collection period of the smart camera based on the second coefficient to obtain a new collection period corresponding to the elderly attribute; and the step of adjusting the predetermined collection period of the smart camera based on the third coefficient includes: adjusting the predetermined collection period of the smart camera based on the third coefficient to obtain a new collection period corresponding to the young and middle-aged attributes;
wherein the new collection period corresponding to the child attribute is shorter than the new collection period corresponding to the young and middle-aged attribute, and the new collection period corresponding to the young and middle-aged attribute is shorter than the new collection period corresponding to the elderly attribute.

13. A remote care device based on person category attributes, comprising:
a memory, storing a remote care program based on person category attributes; and
a processor, configured to execute the remote care program to perform operations comprising:
obtaining a plurality of environmental images including a caretaker based on a smart camera, and determining whether the caretaker is in a dynamic state according to the plurality of environmental images;
detecting a dynamic speed of the caretaker when the caretaker is in the dynamic state; and
determining a category attribute of the caretaker according to the dynamic speed, and collecting a personnel image of the caretaker according to a collection period corresponding to the category attribute to perform a remote care.

14. The remote care device of claim 13, **characterized in that** the operation of determining whether the caretaker is in the dynamic state according to the plurality of environmental images comprises:
determining a luminance difference value between every two environmental images in the plurality of the environmental images, and determining whether any one of the luminance difference values is greater than a predetermined threshold; and
determining that the caretaker is in the dynamic state when any one of the luminance difference values is greater than the predetermined threshold.

15. The remote care device of claim 13, **characterized in that** the operation of detecting the dynamic speed of the caretaker when the caretaker is in the dynamic state comprises:
when the caretaker is in the dynamic state, collecting a face image of the caretaker, identifying the face image, and determining a person identification of the caretaker;
finding a wearable device bound to the person identification, and detecting the dynamic speed of the caretaker based on the wearable device.

16. The remote care device of claim 13, **characterized in that** the operation of determining the category attribute of the caretaker according to the dynamic speed comprises:
determining the category attribute of the caretaker as a child attribute when the dynamic speed is greater than or equal to a first predetermined threshold;
determining the category attribute of the caretaker as an elderly attribute when the dynamic speed is less than or equal to a second predetermined threshold; and
determining the category attribute of the caretaker as an attribute of young and middle-aged people when the dynamic speed is greater than the second predetermined threshold and less than the first predetermined threshold.

17. The remote care device of claim 13, **characterized in that** the operation of obtaining, by the smart camera, the plurality of environmental images including the caretaker comprises:
collecting a plurality of images of an environment where the smart camera is located based on the smart camera running at a predetermined rotational speed;
determining whether there is an image including the caretaker among the plurality of images, and extracting all images including the caretaker from the plurality of images when there is an image including the caretaker; and
sorting all the images including the caretaker to obtain the plurality of the environmental images according to obtaining time points of all the images including the caretaker.

18. The remote care device of claim 13, **characterized in that** a following operation after the operation of determining the category attribute of the caretaker according to the dynamic speed:
adjusting a predetermined collection period of the smart camera according to the category attribute to obtain a collection period corresponding to the category attribute.

19. The remote care device of claim 18, **characterized in that** the operation of adjusting the predetermined collection period of the smart camera according to the category attribute comprises:
when the category attribute is a child attribute, obtaining a first coefficient corresponding to the child attribute, and adjusting the predetermined collection period of the smart camera based on the first coefficient;
when the category attribute is an elderly attribute, obtaining a second coefficient corresponding to the elderly attribute, and adjusting the predetermined collection period of the smart camera based on the second coefficient; and
when the category attribute is a young and middle-aged attribute, obtaining a second coefficient corresponding to the young and middle-aged attribute, and adjusting the predetermined collection period of the smart camera based on the second coefficient.

20. A computer readable storage medium storing instructions executable by a processor to perform the remote care method as claimed in any one of claims 1-12.
